# EUROPEAN PATENT APPLICATION

(11) **EP 4 445 991 A1**
(43) Date of publication of application: **16.10.2024**
(21) Application number: 22904112.4
(22) Date of filing: 30.11.2022
(51) Int. Cl.: B01D 53/94, B01J 29/80

(54) **EXHAUST GAS PURIFICATION CATALYST DEVICE**

(30) Priority: 06.12.2021 JP 2021197746
(71) Applicant: CATALER CORPORATION, Kakegawa-shi, Shizuoka 437-1492 (JP)
(72) Inventor: AMADA, Takehiro, Kakegawa-shi, Shizuoka 437-1492 (JP); IMAI, Hiroto, Kakegawa-shi, Shizuoka 437-1492 (JP); HORI, Keigo, Kakegawa-shi, Shizuoka 437-1492 (JP); SUGIOKA, Daisuke, Kakegawa-shi, Shizuoka 437-1492 (JP); CHIBA, Akiya, Kakegawa-shi, Shizuoka 437-1492 (JP)
(74) Representative: Ricker, Mathias
(86) International application number: PCT/JP2022/044228
(87) International publication number: WO 2023/106181

(57) **Abstract**

Provided is an exhaust gas purification catalyst device comprising a substrate and one or more catalyst coating layers on the substrate, wherein the one or more catalyst coating layers include copper ion-exchanged zeolite and alkali-containing zeolite containing one or more metals selected from among alkali metals and alkaline earth metals, the exhaust gas purification catalyst device satisfying either of the following conditions (A) and (B): (A) both the copper ion-exchanged zeolite and the alkali-containing zeolite are contained in one of the catalyst coating layers, and (B) the catalyst coating layer comprises a first catalyst coating layer containing the copper ion-exchanged zeolite and a second catalyst coating layer containing the alkali-containing zeolite, with the first catalyst coating layer and second catalyst coating layer being layered together in direct contact.

## Description

### FIELD

The present invention relates to an exhaust gas purification catalyst device.

### BACKGROUND

Selective Catalytic Reduction (SCR) systems are known for reduction purification of NOx in exhaust gas emitted by diesel engines prior to its being released into the air. SCR systems are a type of technology using a reducing agent such as ammonia (or an ammonia source such as urea) to reduce NOₓ in exhaust gas to N₂.

Copper ion-exchanged zeolite (in which zeolite is ion-exchanged with copper (Cu)) used in SCR systems is known to exhibit excellent NOx purification performance.

PTL 1, for example, teaches that copper ion-exchanged zeolite having a silica-alumina ratio (SAR) of 3 to 10, and including a metal selected from among alkaline earth metals, has selective reduction catalyst activity for NOx and a high degree of hydrothermal stability.

### [CITATION LIST]

### [PATENT LITERATURE]

[PTL 1] Japanese Patent Public Inspection No. 2015-505290

### SUMMARY

### [TECHNICAL PROBLEM]

In an SCR system, copper ion-exchanged zeolite, and especially copper ion-exchanged zeolite with a low silica-alumina ratio (SAR), is known to exhibit excellent NOx purification performance in the low-temperature range, but also to generate N₂O as a by-product. N₂O is a greenhouse gas associated with global warming, and therefore reduction in its emission is desirable.

The present invention has been devised in light of this situation and its object is to provide an exhaust gas purification catalyst with sufficiently high NOx purification efficiency and low N₂O generation.

### [SOLUTION TO PROBLEM]

The gist of the invention for achieving the aforementioned goal is as follows.

### <Aspect 1>

An exhaust gas purification catalyst device comprising a substrate and one or more catalyst coating layers on the substrate, wherein:
the one or more catalyst coating layers include:
copper ion-exchanged zeolite and
alkali-containing zeolite containing one or more metals selected from among alkali metals and alkaline earth metals,
the exhaust gas purification catalyst device satisfying either of the following conditions (A) and (B):
(A) both the copper ion-exchanged zeolite and the alkali-containing zeolite are contained in one of the catalyst coating layers, and
(B) the catalyst coating layer comprises a first catalyst coating layer containing the copper ion-exchanged zeolite and a second catalyst coating layer containing the alkali-containing zeolite, with the first catalyst coating layer and second catalyst coating layer being layered together in direct contact.

### <Aspect 2>

The exhaust gas purification catalyst device according to aspect 1, which satisfies condition (A).

### <Aspect 3>

The exhaust gas purification catalyst device according to aspect 1, which satisfies condition (B).

### <Aspect 4>

The exhaust gas purification catalyst device according to any one of aspects 1 to 3, wherein the copper ion-exchanged zeolite has a SAR of 15.0 or lower.

### <Aspect 5>

The exhaust gas purification catalyst device according to any one of aspects 1 to 4, wherein the amount of Cu in the copper ion-exchanged zeolite is 0.10 mol or greater and 0.50 mol or lower with respect to 1 mol of Al atoms in the copper ion-exchanged zeolite.

### <Aspect 6>

The exhaust gas purification catalyst device according to any one of aspects 1 to 5, wherein the copper ion-exchanged zeolite is Cu-CH type zeolite A.

### <Aspect 7>

The exhaust gas purification catalyst device according to any one of aspects 1 to 6, wherein the alkali-containing zeolite is LTA, FER, MWW, MFI, MOR, LTL, FAU, BEA, AEI, AFX or CHA-type zeolite, including one or more metals selected from among alkali metals and alkaline earth metals.

### <Aspect 8>

The exhaust gas purification catalyst device according to any one of aspects 1 to 7, wherein the total content of the one or more metals selected from among alkali metals and alkaline earth metals in the alkali-containing zeolite is 0.05 mol or greater and 1.50 mol or lower with respect to 1 mol of Al atoms in the alkali-containing zeolite.

### <Aspect 9>

The exhaust gas purification catalyst device according to any one of aspects 1 to 8, wherein the skeletal structure of the copper ion-exchanged zeolite is the same as the skeletal structure of the alkali-containing zeolite.

### <Aspect 10>

The exhaust gas purification catalyst device according to any one of aspects 1 to 9, wherein the amount of alkali-containing zeolite is 20 parts by mass or greater with respect to 100 parts by mass of the copper ion-exchanged zeolite.

### <Aspect 11>

The exhaust gas purification catalyst device according to any one of aspects 1 to 10, wherein the amount of copper ion-exchanged zeolite is 50 g/L or greater per 1 L of substrate capacity.

### <Aspect 12>

The exhaust gas purification catalyst device according to any one of aspects 1 to 11, which is for selective reduction of nitrogen oxides using ammonia or an ammonia source.

### <Aspect 13>

An exhaust gas purification method which includes:
adding ammonia or an ammonia source to nitrogen oxide-containing exhaust gas, and
contacting the exhaust gas with an exhaust gas purification catalyst device according to any one of aspects 1 to 12 to reduce the nitrogen oxides to nitrogen.

### [ADVANTAGEOUS EFFECTS OF INVENTION]

The present invention provides an exhaust gas purification catalyst with sufficiently high NOx purification efficiency and low N₂O generation.

### DESCRIPTION OF EMBODIMENTS

### <Exhaust gas purification catalyst device>

The exhaust gas purification catalyst device of the invention comprises a substrate and one or more catalyst coating layers on the substrate, wherein:
the one or more catalyst coating layers include:
copper ion-exchanged zeolite and
alkali-containing zeolite containing one or more metals selected from among alkali metals and alkaline earth metals,
the exhaust gas purification catalyst device satisfying either of the following conditions (A) and (B):
(A) both the copper ion-exchanged zeolite and the alkali-containing zeolite are contained in one of the catalyst coating layers, and
(B) the catalyst coating layer comprises a first catalyst coating layer containing the copper ion-exchanged zeolite and a second catalyst coating layer containing the alkali-containing zeolite, with the first catalyst coating layer and second catalyst coating layer being layered together in direct contact.

If either one of conditions (A) and (B) is satisfied for the exhaust gas purification catalyst device of the invention, then the copper ion-exchanged zeolite and the alkali-containing zeolite will be disposed in close proximity. The exhaust gas purification catalyst device of the invention having such a construction exhibits both high NOx purification efficiency and reduced N₂O generation.

The present inventors conjecture that the reason for this effect is as follows.

The mechanism of NOx purification in SCR reaction using copper ion-exchanged zeolite is thought to be based on the following reactions (1) and (2).

4NO + 4NH₃ + O₂ → 4N₂ + 6H₂O (1)

2NO₂ + 2NO + 4NH₃ → 4N₂ + 6H₂O (2)

During SCR reaction, however, the following secondary reactions (3) and (4) may also occur, generating N₂O.

2NO₂ + 2NH₃ → NH₄NO₃ + N₂ + H₂O (3)

NH₄NO₃ → N₂O + 2H₂O (4)

Secondary reaction (3) presumably produces NH₄NO₃ after NO₃⁻ ion has been generated during an intermediate stage of the reaction. Alkali-containing zeolite may have adsorption capacity for NO₃⁻ ion. The copper ion-exchanged zeolite and alkali-containing zeolite are therefore disposed in close proximity so that the intermediate NO₃⁻ ions produced in the secondary reaction (3) by the copper ion-exchanged zeolite are trapped by the alkali-containing zeolite. After the NO₃⁻ ions trapped in the alkali-containing zeolite have formed nitrates with the alkali components, presumably they are reduced by reaction with reducing components in the exhaust gas, being emitted as N₂.

Based on this mechanism, the exhaust gas purification catalyst device of the invention inhibits progression of secondary reactions (3) and (4), instead favoring SCR reaction by the copper ion-exchanged zeolite. However, the present invention is not to be constrained by this interpretation.

As demonstrated in the Examples (and Comparative Examples) below, adding an alkali component to copper ion-exchanged zeolite itself reduces N₂O generation but also lowers activity of the SCR reaction, thus impairing the NOx purification performance.

If the first catalyst coating layer containing the copper ion-exchanged zeolite and the second catalyst coating layer containing the alkali-containing zeolite are disposed separately on the upstream side and downstream side of the substrate, for example, without layering them in direct contact, the inhibiting effect on N₂O generation is minimal. This is thought to be because insufficient proximity between the copper ion-exchanged zeolite and the alkali-containing zeolite makes it difficult for the alkali-containing zeolite to trap intermediate NO₃⁻ ions produced by the secondary reaction (3) of the copper ion-exchanged zeolite.

The elements of the exhaust gas purification catalyst device of the invention will now be explained in order.

### <Substrate>

The substrate of the exhaust gas purification catalyst device of the invention is a honeycomb substrate comprising numerous exhaust gas flow paths partitioned by partition walls. The partition walls of the substrate may also have pores allowing fluid communication between adjacent exhaust gas flow paths.

The constituent material of the substrate may be a fire-resistant inorganic oxide such as cordierite, for example. The substrate may be either a straight flow type or a wall flow type.

The substrate of the exhaust gas purification catalyst device of the invention may typically be a cordierite straight flow type or wall flow type monolith honeycomb substrate, for example.

### <Catalyst coating layer>

The exhaust gas purification catalyst device of the invention has one or more catalyst coating layers on the aforementioned substrate.

The one or more catalyst coating layers include:
copper ion-exchanged zeolite, and
alkali-containing zeolite containing one or more metals selected from among alkali metals and alkaline earth metals.

The exhaust gas purification catalyst device of the invention satisfies either one of conditions (A) and (B).

Conditions (A) and (B) will be explained after describing the copper ion-exchanged zeolite and the alkali-containing zeolite in order.

### <Copper ion-exchanged zeolite>

The copper ion-exchanged zeolite in the exhaust gas purification catalyst device of the invention is zeolite that has been ion-exchanged with copper ion.

The silica-alumina ratio (SAR) of the copper ion-exchanged zeolite may be 20.0 or lower, 18.0 or lower, 15.0 or lower, 14.0 or lower, 13.0 or lower, 12.0 or lower, 11.0 or lower, 10.0 or lower, 9.0 or lower or 8.0 or lower, from the viewpoint of increasing NOx purification performance, and especially NOx purification performance in the low-temperature range. An excessively low SAR may interfere with synthesis of zeolite, however, and may lead to undesirable increase in catalyst cost. In order to avoid such a situation the SAR of the copper ion-exchanged zeolite may be 4.0 or higher, 5.0 or higher, 6.0 or higher or 7.0 or higher.

Throughout the present specification, the SAR value will be represented as the ratio (SiO₂/Al₂O₃) between the molar amount of silica (SiO₂) and the molar amount of alumina (Al₂O₃) in the zeolite. The SAR value as the SiO₂/Al₂O₃ ratio also applies for the alkali-containing zeolite.

From the viewpoint of increasing the SCR activity of the exhaust gas purification catalyst device of the invention, the amount of Cu in the copper ion-exchanged zeolite may be 0.08 mol or greater, 0.10 mol/mol or greater, 0.15 mol/mol or greater or 0.20 mol/mol or greater with respect to 1 mol of Al atoms in the zeolite.

There is no particular upper limit for the amount of Cu in the copper ion-exchanged zeolite from the viewpoint of SCR activity. Due to production limits for Cu in copper ion-exchanged zeolite, however, the amount of Cu in the copper ion-exchanged zeolite may be 0.80 mol/mol or lower, 0.50 mol/mol or lower, 0.45 mol/mol or lower, 0.40 mol/mol or lower, 0.35 mol/mol or lower or 0.30 mol/mol or lower, with respect to 1 mol of Al atoms in the zeolite, from the viewpoint of maintaining suitable production cost for the exhaust gas purification catalyst device.

The amount of Cu in the copper ion-exchanged zeolite will typically be 0.10 mol or greater and 0.50 mol or lower with respect to 1 mol of Al atoms in the zeolite.

The crystal structure of the copper ion-exchanged zeolite is arbitrary. The crystal structures of copper ion-exchanged zeolite that can be used for the invention include (using their respective structure codes in parentheses): type A (LTA), ferrierite (FER), MCM-22 (MWW), ZSM-5 (MFI), mordenite (MOR), type L (LTL), type X or type Y (FAU), beta-type (BEA), AEI-type, AFX-type and chabazite (CHA).

The copper ion-exchanged zeolite may be, in particular, Cu-CH type zeolite A, which is chabazite (CHA) type zeolite ion-exchanged with Cu.

The copper ion-exchanged zeolite in the exhaust gas purification catalyst device of the invention may also be particulate. The particle diameter (secondary particle size) of particulate copper ion-exchanged zeolite may be 0.5 µm or greater, 1 µm or greater, 3 µm or greater or 5 µm or greater, and 40 µm or smaller, 20 µm or smaller or 10 µm or smaller, for example. The particle diameter of the support particles may be the median diameter (D50) obtained by a dynamic light scattering method, for a suspension in which the support particles are dispersed in an appropriate liquid medium (such as water).

The copper ion-exchanged zeolite may be produced, for example, by ion-exchanging a zeolite starting material having the desired SAR and crystalline form, with copper ion. The zeolite starting material may be zeolite that has been ion-exchanged with protons.

Ion-exchange for production of copper ion-exchanged zeolite may be carried out by contacting the zeolite starting material with a copper ion source in an appropriate solvent (such as water). Alternatively, the zeolite starting material and copper ion source may be mixed in a mortar. The copper ion source may be a solvent-soluble salt such as copper acetate or copper sulfate.

### <Alkali-containing zeolite>

The alkali-containing zeolite in the exhaust gas purification catalyst device of the invention is zeolite containing one or more alkali components selected from among alkali metals and alkaline earth metals.

The silica-alumina ratio (SAR) of the alkali-containing zeolite may be any desired value, such as 30.0 or lower, 25.0 or lower, 20.0 or lower, 18.0 or lower or 15.0 or lower. An excessively low SAR may interfere with synthesis of zeolite, however, and may lead to undesirable increase in catalyst cost. In order to avoid such a situation the SAR of the copper ion-exchanged zeolite may be 4.0 or higher, 6.0 or higher, 8.0 or higher, 10.0 or higher or 12.0 or higher.

The alkali component in the alkali-containing zeolite is one or more metals selected from among alkali metals and alkaline earth metals. From the viewpoint of high NO₃⁻ ion adsorption capacity, preferred alkali metals and alkaline earth metals are those satisfying the conditions of either (and preferably both) high basicity and a large ion radius. From this viewpoint, the alkali metal may be potassium, rubidium or cesium, and the alkaline earth metal may be calcium, strontium or barium, for example.

One or more selected from among cesium, calcium, strontium and barium are preferred, with barium being especially preferred from the viewpoint of high NO₃⁻ ion adsorption capacity.

From the viewpoint of effectively exhibiting NO₃⁻ ion adsorption capacity, the amount of alkali component in the alkali-containing zeolite may be 0.05 mol or greater, 0.10 mol or greater, 0.20 mol or greater, 0.30 mol or greater, 0.40 mol or greater or 0.50 mol or greater as the total molar amount of the alkali metal and alkaline earth metal with respect to 1 mol of Al atoms in the alkali-containing zeolite.

From the viewpoint of appropriately maintaining production cost of the exhaust gas purification catalyst, the amount of alkali component in the alkali-containing zeolite may be 2.00 mol or lower, 1.80 mol or lower, 1.50 mol or lower, 1.20 mol or lower, 1.00 mol or lower, 0.80 mol/mol-Al or lower or 0.70 mol or lower, as the total molar amount of the alkali metal and alkaline earth metal with respect to 1 mol of Al atoms in the alkali-containing zeolite.

The amount of alkali component in the alkali-containing zeolite will typically be 0.05 mol or greater, 0.075 mol or greater or 0.10 mol or greater, and 1.50 mol or lower or 1.25 mol or lower, as the total molar amount of the alkali metal and alkaline earth metal with respect to 1 mol of Al atoms in the alkali-containing zeolite.

The alkali component in the alkali-containing zeolite may also be present in the alkali-containing zeolite in the ion state, from the viewpoint of high NO₃⁻ adsorption capacity.

The crystalline structure of the alkali-containing zeolite may be as desired. The crystal structures of alkali-containing zeolite that can be used for the invention include (using their respective structure codes in parentheses): type A (LTA), ferrierite (FER), MCM-22 (MWW), ZSM-5 (MFI), mordenite (MOR), type L (LTL), type X or type Y (FAU), beta-type (BEA), AEI-type, AFX-type and chabazite (CHA).

The crystalline structure of the alkali-containing zeolite may be the same as or different from the skeletal structure of the copper ion-exchanged zeolite. According to one aspect of the invention, the skeletal structure of the copper ion-exchanged zeolite is the same as the skeletal structure of the alkali-containing zeolite.

The alkali-containing zeolite may be produced, for example, by a method which comprises:
mixing a zeolite starting material having a desired SAR and crystalline form with an alkali source to obtain a mixture, and
firing the obtained mixture.

The alkali source may be an acetate, sulfate, nitrate or hydroxide of any desired alkali metal or alkaline earth metal, for example. Using these alkali sources is preferred because they can yield alkali-containing zeolite including the alkali component in the ionic state, and having high NO₃⁻ ion adsorption capacity. In alkali-containing zeolite obtained using carbonate as the alkali source, on the other hand, the alkali components that are present are likely not in the ionic state.

### <Condition (A)>

Condition (A) for the exhaust gas purification catalyst device of the invention is that the copper ion-exchanged zeolite and alkali-containing zeolite are both present in one of the one or more catalyst coating layers on the substrate.

If the exhaust gas purification catalyst device of the invention satisfies condition (A), the copper ion-exchanged zeolite and the alkali-containing zeolite will be disposed in close proximity, allowing intermediate NO₃⁻ ions from secondary reaction (3) of the copper ion-exchanged zeolite to be effectively trapped by the alkali-containing zeolite.

A catalyst coating layer containing both copper ion-exchanged zeolite and alkali-containing zeolite will hereunder be referred to as "specific catalyst coating layer".

From the viewpoint of ensuring SCR performance, the amount of copper ion-exchanged zeolite in the specific catalyst coating layer may be 50 g/L or greater, 60 g/L or greater, 70 g/L or greater, 80 g/L or greater, 90 g/L or greater or 100 g/L or greater, as the mass of the copper ion-exchanged zeolite per 1 L of substrate capacity.

From the viewpoint of avoiding excessive pressure loss for efficient exhaust gas purification, the amount of copper ion-exchanged zeolite may be 200 g/L or lower, 180 g/L or lower, 160 g/L or lower or 140 g/L or lower, as the mass of the copper ion-exchanged zeolite per 1 L of substrate capacity.

The amount of alkali-containing zeolite in the specific catalyst coating layer may be 20 parts by mass or greater, 25 parts by mass or greater, 30 mass% or greater, 35 mass% or greater or 40 mass% or greater, as the mass of the alkali-containing zeolite with respect to 100 parts by mass of the copper ion-exchanged zeolite, from the viewpoint of ensuring adsorption capacity for the intermediate NO₃⁻ ions from the secondary reaction (3) of the copper ion-exchanged zeolite.

From the viewpoint of adequately exhibiting the SCR activity of the copper ion-exchanged zeolite, on the other hand, the amount of alkali-containing zeolite with respect to 100 parts by mass of the copper ion-exchanged zeolite may be 200 parts by mass or lower, 150 parts by mass or lower, 120 parts by mass or lower, 100 parts by mass or lower, 80 parts by mass or lower, 60 parts by mass or lower or 50 parts by mass or lower.

The specific catalyst coating layer may also include optional components other than the copper ion-exchanged zeolite and alkali-containing zeolite. Such optional components may be inorganic oxides other than the copper ion-exchanged zeolite and alkali-containing zeolite, and a binder, for example.

The specific catalyst coating layer may include or not include precious metal catalysts commonly used in exhaust gas purification catalyst devices. Such precious metal catalysts are typically one or more selected from among platinum, rhodium and palladium.

According to one aspect of the invention, the specific catalyst coating layer contains essentially no precious metal catalyst. That "the specific catalyst coating layer contains essentially no precious metal catalyst" means that the amount of precious metal catalyst in the specific catalyst coating layer is 0.1 g/L or lower, 0.05 g/L or lower, 0.01 g/L or lower, 0.005 g/L or lower or 0.001 g/L or lower, or is 0 g/L, as the mass of the precious metal catalyst per 1 L of substrate capacity.

The exhaust gas purification catalyst device of the invention may have the specific catalyst coating layer as a monolayer, or it may have two or more specific catalyst coating layers. According to one aspect of the invention, the exhaust gas purification catalyst device has the specific catalyst coating layer as a monolayer.

The exhaust gas purification catalyst device of the invention may also have, or not have, another catalyst coating layer other than the specific catalyst coating layer.

When the exhaust gas purification catalyst device of the invention has another catalyst coating layer other than the specific catalyst coating layer, that catalyst coating layer may also include one or more components selected from among inorganic oxides, precious metal catalysts and binders.

According to another aspect of the invention, the exhaust gas purification catalyst device does not have any catalyst coating layer other than the specific catalyst coating layer.

### <Condition (B)>

Condition (B) for the exhaust gas purification catalyst device of the invention is that the catalyst coating layer includes a first catalyst coating layer comprising a first catalyst coating layer containing the copper ion-exchanged zeolite and a second catalyst coating layer containing the alkali-containing zeolite, with the first catalyst coating layer and second catalyst coating layer being layered together in direct contact.

If the exhaust gas purification catalyst device of the invention satisfies condition (B), as with condition (A), the copper ion-exchanged zeolite and the alkali-containing zeolite will be disposed in close proximity, allowing intermediate NO₃⁻ ions from secondary reaction (3) of the copper ion-exchanged zeolite to be effectively trapped by the alkali-containing zeolite.

If the first catalyst coating layer and second catalyst coating layer are layered together in direct contact, either one may be on the top (exhaust gas flow path side) and the other on the bottom (substrate side).

From the viewpoint of ensuring SCR performance, the coating amount of the first catalyst coating layer may be a coating amount such that the mass of the copper ion-exchanged zeolite is 50 g/L or greater, 60 g/L or greater, 70 g/L or greater, 80 g/L or greater, 90 g/L or greater or 100 g/L or greater per 1 L of substrate capacity.

From the viewpoint of avoiding excessive pressure loss for efficient exhaust gas purification, the coating amount of the first catalyst coating layer may be a coating amount such that the mass of the copper ion-exchanged zeolite is 200 g/L or lower, 180 g/L or lower, 160 g/L or lower or 140 g/L or lower per 1 L of substrate capacity.

The coating amount of the second catalyst coating layer may be a coating amount such that the mass of the alkali-containing zeolite is 20 parts by mass or greater, 25 parts by mass or greater, 30 mass% or greater, 35 mass% or greater or 40 mass% or greater, with respect to 100 parts by mass of the copper ion-exchanged zeolite in the first catalyst coating layer, from the viewpoint of ensuring adsorption capacity for the intermediate NO₃⁻ ions from the secondary reaction (3) of the copper ion-exchanged zeolite.

The coating amount of the second catalyst coating layer may be a coating amount such that the mass of the alkali-containing zeolite is 200 parts by mass or lower, 150 parts by mass or lower, 120 parts by mass or lower, 100 parts by mass or lower, 80 parts by mass or lower, 60 parts by mass or lower or 50 parts by mass or lower, with respect to 100 parts by mass of the copper ion-exchanged zeolite in the first catalyst coating layer, from the viewpoint of adequately exhibiting the SCR activity of the copper ion-exchanged zeolite.

The first catalyst coating layer and second catalyst coating layer may each contain optional components other than the copper ion-exchanged zeolite and alkali-containing zeolite. Such optional components may be inorganic oxides other than the copper ion-exchanged zeolite and alkali-containing zeolite, and a binder, for example.

The first catalyst coating layer and second catalyst coating layer may each include or not include precious metal catalysts commonly used in exhaust gas purification catalyst devices. Such precious metal catalysts are typically one or more selected from among platinum, rhodium and palladium.

According to one aspect of the invention, the first catalyst coating layer and second catalyst coating layer both contain essentially no precious metal catalyst. That "the first catalyst coating layer and second catalyst coating layer contain essentially no precious metal catalyst" means that the amount of precious metal catalyst in each of the first catalyst coating layer and second catalyst coating layer is 0.1 g/L or lower, 0.05 g/L or lower, 0.01 g/L or lower, 0.005 g/L or lower or 0.001 g/L or lower, or is 0 g/L, as the mass of the precious metal catalyst per 1 L of substrate capacity.

The exhaust gas purification catalyst device of the invention may also have, or not have, another catalyst coating layer other than the first catalyst coating layer and second catalyst coating layer.

When the exhaust gas purification catalyst device of the invention has another catalyst coating layer other than the first catalyst coating layer and second catalyst coating layer, that catalyst coating layer may include one or more components selected from among inorganic oxides, precious metal catalysts and binders.

According to one aspect of the invention, the exhaust gas purification catalyst device has the first catalyst coating layer and second catalyst coating layer layered in that order on the substrate, and has no other catalyst coating layer. According to another aspect of the invention, the exhaust gas purification catalyst device has the second catalyst coating layer and first catalyst coating layer layered in that order on the substrate, and has no other catalyst coating layer.

### <Method for producing exhaust gas purification catalyst device>

The exhaust gas purification catalyst device of the invention may be produced by any method.

The exhaust gas purification catalyst device of the invention may be produced, for example, by:
a method that includes forming the specific catalyst coating layer on the substrate, or
a method that includes forming the first catalyst coating layer and second catalyst coating layer in any desired order on the substrate.

The substrate may be appropriately selected according to the substrate of the exhaust gas purification catalyst device. The substrate may typically be a cordierite straight flow type or wall flow type monolith honeycomb substrate, for example.

The specific catalyst coating layer, or the first catalyst coating layer and second catalyst coating layer, may be formed on the substrate by a method in which a coating solution comprising the starting components for the desired catalyst coating layer is coated to form a coating layer, and the obtained coating layer is fired. This forms a specific catalyst coating layer on the substrate. The coating layer may be dried if necessary after coating and before firing.

The coating solution used to form the specific catalyst coating layer may comprise the copper ion-exchanged zeolite and alkali-containing zeolite, and if necessary optional components or their precursors. The coating solution used to form the first catalyst coating layer may comprise the copper ion-exchanged zeolite, and if necessary optional components or their precursors. The coating solution used to form the second catalyst coating layer may comprise the alkali-containing zeolite, and if necessary optional components or their precursors.

The solvent of each coating solution may be water or an aqueous organic solvent, or a mixture thereof, but will typically be water.

Coating of the coating solution and drying and firing after coating may be carried out according to any publicly known method.

### <Exhaust gas purification method>

The exhaust gas purification catalyst device of the invention is suitable as a catalyst device for selective reduction of nitrogen oxides using ammonia or an ammonia source.

According to a different aspect, therefore, the invention provides an exhaust gas purification method which includes:
adding ammonia or an ammonia source to nitrogen oxide-containing exhaust gas, and
contacting the exhaust gas with an exhaust gas purification catalyst device of the invention to reduce the nitrogen oxides to nitrogen.

Examples of ammonia sources include ammonia water, urea and ammonia salts (such as ammonium carbonate, ammonium hydrogen carbonate and ammonium carbamate). This aspect of the invention also encompasses the use of an ammonia occlusion material such as magnesium chloride or strontium chloride, using the occluded ammonia as an ammonia source.

### EXAMPLES

### 1. Synthesis of alkali-containing zeolite

### (1) Synthesis of Ba-CH zeolite A

CH Zeolite A (H-CHA) with a silica-alumina ratio (SAR) of 15, ion-exchanged with protons, and barium acetate as a barium source, were mixed for 30 minutes in a mortar. The obtained mixture was fired for 3 hours in air at 500°C to obtain CH zeolite A (Ba-CHA) ion-exchanged with barium. The amount of barium acetate used was an amount such that the barium atom quantity with respect to 1 mol of Al atoms in the CH zeolite A satisfied Ba/Al = 0.5(mol/mol).

### (2) Synthesis of other alkali-containing zeolites

Different alkali-containing zeolites were synthesized in the same manner as Ba-CHA, except that the type of zeolite and the type and amount of alkali source used (the amount of alkali metal or alkaline earth metal atoms (M) with respect to 1 mol of Al atoms in the zeolite, or the M/Al ratio (mol/mol)) were each changed as shown in Table 1.

### [Table 1]

**Table 1**

| Abbreviation for alkali-containing zeolite | Zeolite starting material | | Alkali source | |
|---|---|---|---|---|
| | Exchange ion-crystal system | SAR | Type | M/Al (mol/mol) |
| Ba-CHA | H-CHA | 15 | Barium acetate | 0.5 |
| Ba-MFI | H-MFI | 20 | Barium acetate | 0.7 |
| Ba-BEA | H-BEA | 20 | Barium acetate | 0.7 |
| Sr-CHA | H-CHA | 15 | Strontium nitrate | 0.5 |
| Ca-CHA | H-CHA | 15 | Calcium nitrate | 0.5 |
| Cs-CHA | H-CHA | 15 | Cesium nitrate | 0.5 |
| Ba-Cu-CHA | Cu-CHA (Cu/Al=0.22) | 7.5 | Barium acetate | 0.1 |
| Ba-Cu-CHA carbonate | Cu-CHA (Cu/Al=0.22) | 7.5 | Barium carbonate | 0.1 |
| Sr-Cu-CHA | Cu-CHA (Cu/Al=0.22) | 7.5 | Strontium nitrate | 0.1 |
| Ca-Cu-CHA | Cu-CHA (Cu/Al=0.22) | 7.5 | Calcium nitrate | 0.1 |
| Cs-Cu-CHA | Cu-CHA (Cu/Al=0.22) | 7.5 | Cesium nitrate | 0.1 |

In Table 1, the abbreviations in the "zeolite starting material" column have the following meanings.
H-CHA: CH zeolite A, ion-exchanged with protons, SAR 15
H-MFI: MFI type zeolite, ion-exchanged with protons, SAR 20
H-BEA: BE zeolite A, ion-exchanged with protons, SAR 20
Cu-CHA: CH zeolite A, ion-exchanged with copper ions, Cu/Al = 0.22 mol/mol, SAR 7.5

### 2. Production of exhaust gas purification catalyst devices

### <Comparative Example 1: Cu-CHA monolayer (basic)>

Cu-CHA having a SAR of 7.5 and a Cu amount per Al atom (Cu/Al) of 0.22 mol/mol, a silicone-based binder and water were mixed to obtain a slurry for coating of a Cu-CHA coating layer.

The slurry for coating of the Cu-CHA coating layer was coated onto a straight flow cordierite honeycomb substrate with an apparent volume of about 1 L to a post-firing coating amount of 120 g/L, and fired for 1 hour in air at 500°C, to produce an exhaust gas purification catalyst device having a monolayer Cu-CHA coating layer on the substrate.

### <Example 1: Lower layer Cu-CHA, upper layer Ba-CHA>

A slurry for coating of the Cu-CHA coating layer was prepared in the same manner as Comparative Example 1. The obtained Ba-CHA, a silicone-based binder and water were mixed to obtain a slurry for coating of the Ba-CHA coating layer.

The slurry for coating of the Cu-CHA coating layer was coated onto a straight flow cordierite honeycomb substrate with an apparent volume of about 1 L to a post-firing coating amount of 120 g/L, and fired for 1 hour in air at 500°C, to form a Cu-CHA coating layer on the substrate. The obtained slurry for coating of the Ba-CHA coating layer was then coated onto the Cu-CHA coating layer to a post-firing coating amount of 50 g/L, and fired for 1 hour in air at 500°C, to produce an exhaust gas purification catalyst device having a Cu-CHA coating layer and a Ba-CHA coating layer in that order on the substrate.

### <Example 2: Lower layer Ba-CHA, upper layer Cu-CHA>

An exhaust gas purification catalyst device having a Ba-CHA coating layer and a Cu-CHA coating layer in that order on a substrate was produced in the same manner as Example 1, except that the Cu-CHA coating layer and Ba-CHA coating layer were formed in the reverse order.

### <Example 3: Cu-CHA + Ba-CHA mixed monolayer>

Cu-CHA having a SAR of 7.5 and a Cu amount per Al atom (Cu/Al) of 0.22 mol/mol, the Ba-CHA obtained as described above, a silicone-based binder and water were mixed to obtain a slurry for coating of a Cu-CHA + Ba-CHA mixed coating layer. The mass ratio of the Cu-CHA and Ba-CHA was Cu-CHA:Ba-CHA = 7:3.

The slurry for coating of a Cu-CHA + Ba-CHA mixed coating layer obtained as described above was coated onto a straight flow cordierite honeycomb substrate with an apparent volume of about 1 L to a post-firing coating amount of 170 g/L, and fired for 1 hour in air at 500°C, to produce an exhaust gas purification catalyst device having a monolayer coating layer containing Cu-CHA and Ba-CHA on the substrate.

### <Examples 4 to 8: Mixed monolayers of Cu-CHA + different alkali-containing zeolites>

Exhaust gas purification catalyst devices each having a monolayer coating layer containing Cu-CHA and a different alkali-containing zeolite on the substrate were produced in the same manner as Example 3, except for using the Ba-MFI (Example 4), Ba-BEA (Example 5), Sr-CHA (Example 6), Ca-CHA (Example 7) or Cs-CHA (Example 8) obtained as described above, instead of Ba-CHA.

### <Comparative Example 2: Ba-Cu-CHA monolayer>

An exhaust gas purification catalyst device having a monolayer coating layer containing Ba-Cu-CHA on the substrate was produced in the same manner as Comparative Example 1, except that Ba-Cu-CHA obtained as described above was used instead of Cu-CHA.

### <Comparative Example 3: Upstream side Ba-CHA, downstream side Cu-CHA>

A slurry for coating of the Ba-CHA coating layer was prepared in the same manner as Example 1. A slurry for coating of the Cu-CHA coating layer was also prepared in the same manner as Comparative Example 1.

The slurry for coating of the Ba-CHA coating layer was coated from the upstream side edge of a straight flow cordierite honeycomb substrate with an apparent volume of about 1 L, to a coating width of 50% of the substrate length and a post-firing coating amount of 170 g/L, and fired for 1 hour in air at 500°C, to form a Ba-CHA coating layer on the upstream side of the substrate. The slurry for coating of the Cu-CHA coating layer was then coated from the downstream side edge of the Ba-CHA coating layer-formed substrate, to a coating width of 50% of the substrate length and a post-firing coating amount of 170 g/L, and fired for 1 hour in air at 500°C, to produce an exhaust gas purification catalyst device having a monolayer coating layer containing Ba-CHA on the upstream side of the substrate and a monolayer coating layer containing Cu-CHA on the downstream side.

### <Comparative Example 4: Upstream side Cu-CHA, downstream side Ba-CHA>

An exhaust gas purification catalyst device having a monolayer coating layer containing Cu-CHA on the upstream side of the substrate and a monolayer coating layer containing Ba-CHA on the downstream side was produced in the same manner as Comparative Example 3, except that the location for forming the Cu-CHA coating layer was the upstream side and the location for forming the Ba-CHA coating layer was the downstream side.

### <Comparative Example 5: Ba-Cu-CHA carbonate monolayer>

An exhaust gas purification catalyst device having a monolayer coating layer containing Ba-Cu-CHA carbonate on the substrate was produced in the same manner as Comparative Example 1, except that Ba-Cu-CHA carbonate obtained as described above was used instead of Cu-CHA.

### <Comparative Example 6: Cu-CHA + NH₄-CHA mixed monolayer>

An exhaust gas purification catalyst device having a monolayer coating layer containing Cu-CHA and NH₄-CHA on the substrate was produced in the same manner as Example 3, except that NH₄-CHA with a SAR of 15 was used instead of Ba-CHA.

### <Comparative Examples 7 to 9: Ba-Cu-CHA monolayer>

Exhaust gas purification catalyst devices each having a monolayer coating layer containing Ba-Cu-CHA on the substrate were produced in the same manner as Comparative Example 1, except for using Sr-Cu-CHA (Comparative Example 7), Ca-Cu-CHA (Comparative Example 8) or Cs-Cu-CHA (Comparative Example 9) instead of Cu-CHA.

### 3. Evaluation of exhaust gas purification catalyst devices

The exhaust gas purification catalyst devices obtained in the Examples and Comparative Examples were subjected to 50 hours of hydrothermal endurance at a catalyst layer temperature of 650°C while circulating air containing 10 mass% water vapor.

A model gas with the following composition was supplied at a space velocity of 80,000 h⁻¹ to each hydrothermal endurance tested exhaust gas purification catalyst device, and the NOx purification rate at a catalyst layer temperature of 200°C and the N₂O emission at a catalyst layer temperature of 300°C were measured during circulation. The amounts were evaluated on the following scale based on the composition of the exhaust gas after stabilization of the composition.

N₂O emission: N₂O concentration (ppm) in exhaust gas after stabilization of composition NOx purification rate (%): {1 - (NOx concentration (ppm) in exhaust gas/NOx concentration (ppm) in supply gas} × 100

The concentration units of "ppm" are parts per million based on moles.

The model gas composition is shown in Table 2.

### [Table 2]

**Table 2**

| | |
|---|---|
| NO | 500 ppm |
| NH₃ | 500 ppm |
| O₂ | 10 vol% |
| H₂O | 5 vol% |
| N₂ | Balance |
| Space velocity | 80,000 h⁻¹ |

The evaluation results are shown in Table 3.

### [Table 3]

**Table 3**

| | Catalyst coating layer structure | NOx purification rate at 200°C (%) | N₂O emission at 300°C (ppm) |
|---|---|---|---|
| Comp. Example 1 | Cu-CHA monolayer (basic) | 80.7 | 13.1 |
| Example 1 | Lower layer Cu-CHA, upper layer Ba-CHA | 81.6 | 9.3 |
| Example 2 | Lower layer Ba-CHA, upper layer Cu-CHA | 81.3 | 9.5 |
| Example 3 | Cu-CHA + Ba-CHA mixed monolayer | 80.3 | 8.6 |
| Example 4 | Cu-CHA + Ba-MFI mixed monolayer | 80.2 | 93 |
| Example 5 | Cu-CHA + Ba-BEA mixed monolayer | 80.4 | 9.5 |
| Example 6 | Cu-CHA + Sr-CHA mixed monolayer | 78.9 | 11.6 |
| Example 7 | Cu-CHA + Ca-CHA mixed monolayer | 81.6 | 11.0 |
| Example 8 | Cu-CHA + Cs-CHA mixed monolayer | 80.6 | 11.9 |
| Comp. Example 2 | Ba-Cu-CHA monolayer | 63.7 | 7.6 |
| Comp. Example 3 | Upstream side Ba-CHA, downstream side, Cu-CHA | 80.3 | 127 |
| Comp. Example 4 | Upstream side Cu-CHA, downstream side, Ba-CHA | 77.2 | 12.1 |
| Comp. Example 5 | Ba-Cu-CHA carbonate monolayer | 65.7 | 11.9 |
| Comp. Example 6 | Cu-CHA + NH₄-CHA mixed monolayer | 80.0 | 12.8 |
| Comp. Example 7 | Sr-Cu-CHA monolayer | 64.1 | 11.0 |
| Comp. Example 8 | Ca-Cu-CHA monolayer | 66.8 | 106 |
| Comp. Example 9 | Cs-Cu-CHA monolayer | 65.8 | 11.4 |

The exhaust gas purification catalyst devices of Comparative Examples 2, 5 and 7 to 9 had monolayer structure catalyst coating layers comprising alkali-containing copper ion-exchanged zeolite, with an alkali component added to the copper ion-exchanged zeolite (Cu-CHA). With these exhaust gas purification catalyst devices, N₂O emissions were reduced but the NOx purification rate was impaired, compared to the exhaust gas purification catalyst device of Comparative Example 1 which had a monolayer structure coating layer comprising copper ion-exchanged zeolite.

With the exhaust gas purification catalyst devices of Comparative Examples 3 and 4, on the other hand, the coating layer comprising copper ion-exchanged zeolite and the coating layer comprising alkali-containing zeolite were disposed by zone coating on the upstream side and the downstream side. The exhaust gas purification catalyst device of Comparative Example 6 had a monolayer structure catalyst coating layer comprising both copper ion-exchanged zeolite and NH₄ ion-exchanged zeolite (NH₄-CHA). With these exhaust gas purification catalyst devices, no significant difference was seen in the NOx purification rates or N₂O emissions compared to the exhaust gas purification catalyst device of Comparative Example 1.

With the exhaust gas purification catalyst devices of Examples 1 and 2, however, the coating layer comprising copper ion-exchanged zeolite and the coating layer comprising alkali-containing zeolite were disposed as layers in direct contact. The exhaust gas purification catalyst devices of Examples 3 to 8 had monolayer structure catalyst coating layers comprising both copper ion-exchanged zeolite and alkali-containing zeolite.

With the exhaust gas purification catalyst devices of these Examples, the NOx purification rates were improved and the N₂O emissions were reduced compared to the exhaust gas purification catalyst device of Comparative Example 1. Reduction in N₂O emission was particularly effective with the exhaust gas purification catalyst devices of Examples 1 to 5 which comprised barium as an alkali component.

## Claims

1. An exhaust gas purification catalyst device comprising a substrate and one or more catalyst coating layers on the substrate, wherein:
the one or more catalyst coating layers include:
copper ion-exchanged zeolite and
alkali-containing zeolite containing one or more metals selected from among alkali metals and alkaline earth metals, the exhaust gas purification catalyst device satisfying either of the following conditions (A) and (B):
(A) both the copper ion-exchanged zeolite and the alkali-containing zeolite are contained in one of the catalyst coating layers, and
(B) the catalyst coating layer comprises a first catalyst coating layer containing the copper ion-exchanged zeolite and a second catalyst coating layer containing the alkali-containing zeolite, with the first catalyst coating layer and second catalyst coating layer being layered together in direct contact.

2. The exhaust gas purification catalyst device according to claim 1, which satisfies condition (A).

3. The exhaust gas purification catalyst device according to claim 1, which satisfies condition (B).

4. The exhaust gas purification catalyst device according to any one of claims 1 to 3, wherein the copper ion-exchanged zeolite has a SAR of 15.0 or lower.

5. The exhaust gas purification catalyst device according to any one of claims 1 to 4, wherein the amount of Cu in the copper ion-exchanged zeolite is 0.10 mol or greater and 0.50 mol or lower with respect to 1 mol of Al atoms in the copper ion-exchanged zeolite.

6. The exhaust gas purification catalyst device according to any one of claims 1 to 5, wherein the copper ion-exchanged zeolite is Cu-CH type zeolite A.

7. The exhaust gas purification catalyst device according to any one of claims 1 to 6, wherein the alkali-containing zeolite is LTA, FER, MWW, MFI, MOR, LTL, FAU, BEA, AEI, AFX or CHA-type zeolite, including one or more metals selected from among alkali metals and alkaline earth metals.

8. The exhaust gas purification catalyst device according to any one of claims 1 to 7, wherein the total content of the one or more metals selected from among alkali metals and alkaline earth metals in the alkali-containing zeolite is 0.05 mol or greater and 1.50 mol or lower with respect to 1 mol of Al atoms in the alkali-containing zeolite.

9. The exhaust gas purification catalyst device according to any one of claims 1 to 8, wherein the skeletal structure of the copper ion-exchanged zeolite is the same as the skeletal structure of the alkali-containing zeolite.

10. The exhaust gas purification catalyst device according to any one of claims 1 to 9, wherein the amount of alkali-containing zeolite is 20 parts by mass or greater with respect to 100 parts by mass of the copper ion-exchanged zeolite.

11. The exhaust gas purification catalyst device according to any one of claims 1 to 10, wherein the amount of copper ion-exchanged zeolite is 50 g/L or greater per 1 L of substrate capacity.

12. The exhaust gas purification catalyst device according to any one of claims 1 to 11, which is for selective reduction of nitrogen oxides using ammonia or an ammonia source.

13. adding ammonia or an ammonia source to nitrogen oxide-containing exhaust gas, and
contacting the exhaust gas with an exhaust gas purification catalyst device according to any one of claims 1 to 12 to reduce the nitrogen oxides to nitrogen.
